# EUROPEAN PATENT SPECIFICATION

(11) **EP 1 091 639 B1**
(45) Date of publication and mention of the grant of the patent: **28.08.2002**
(21) Application number: 99929969.6
(22) Date of filing: 30.06.1999
(51) Int. Cl.: A01G 9/10

(54) **PLANT TRAY AND CULTIVATION SYSTEM PROVIDED WITH SUCH A PLANT TRAY**
PFLANZENPALETTE UND MIT SOLCHER PFLANZENPALETTE VERSEHENES ZUCHTSYSTEM
PANIER POUR PLANTES ET SYSTEME DE CULTURE COMPRENANT LE PANIER POUR PLANTES

(30) Priority: 30.06.1998 NL 1009527
(43) Date of publication of application: 18.04.2001
(73) Proprietor: Hydroponics Holding B.V., 1693 HR Wevershoof (NL)
(72) Inventor: SMAK, Pieter, Wilhelmus, Johannes, NL-1693 HR Wervershoof (NL)
(74) Representative: Jorritsma, Ruurd
(86) International application number: NL9900405
(87) International publication number: WO00000014

(56) References cited:
- EP-A- 0 195 653
- EP-A- 0 242 498
- EP-A- 0 565 201
- EP-A- 0 758 524
- DE-U- 9 209 299
- FR-A- 2 620 899

## Description

The present invention relates to a plant tray according to the preamble of Claim 1.

A plant tray of this type is disclosed in EP 0 758 524 A1. Tulip bulbs, but also other plants, are grown in such trays.

Netherlands Laid Open Application 9200641 describes a plant tray wherein the bottom of each of the accommodations is closed. Bulbs are placed in these accommodations through insertion openings made at the top and water is then supplied. This water collects at the bottom and root growth occurs here. Because this water does not circulate, slime formation lakes place, which is disadvantageous for the further development of the bulb and, moreover, causes stench and rotting.

According to an alternative a tray is provided consisting of an essentially open container having a base surface from which a number of spikes or nails protrude onto which the bulbs concerned are pushed. There are thus no boundaries between the bulbs. Water is transported continuously or intermittently through a container of this type, as a result of which the problem of slime formation, stench and rotting is eliminated. The bulbs are arranged freely adjoining one another and it has been found that as a result of appreciable root formation and spread the bulbs can no longer be removed as individual items because the roots of adjacent bulbous plants become appreciably intertwined. This latter system is used in particular for long-term cultivation, for example ten weeks. The root development during such a long period can be appreciable. It is essential that the pins do not pierce through the root base because this causes irreparable damage to the plant. In practice it has been found that this does occur in particular cases.

According to other cultivation systems the plant is grown for a short time. Although the system of root formation described above is restricted to an appreciable extent, it is not completely eliminated. Furthermore, this means that the plant is stored dry for a longer period, as a result of which the quality could deteriorate. Moreover, the cultivation of such plants is seasonal and if the plant has to be moved again two weeks prior to harvest, this results in substantial peaks in the distribution of work, which is undesirable.

The construction described in EP 0 758 524 Al comprises square accommodations. each of which is always provided with finger-like retaining elements half way up the boundary walls. Each tray is open at the bottom.

The aim of the present invention is to provide a plant tray with which the production of slime in the water in which the roots are standing is prevented, with which it is precluded that plants can no longer be removed because the roots of adjacent plants grow into one another and with which it is possible to carry out both a long cultivation (for example 10 weeks) and a short cultivation (for example 2 weeks).

Said aim is achieved with a plant tray as described above having the characterising features of Claim 1. Because the accommodations terminate in an opening at the bottom, a system for the supply and removal of water which is common to the various accommodations can be implemented beneath the tray, as a result of which the production of slime is no longer to be feared. Certainly in the case of long cultivation, there will be appreciable root formation and the roots of adjacent plants may grow into one another. Because of the presence of a cutting edge, when the bulb is withdrawn from the accommodations the soft root material is automatically cut free and no adjacent bulbous plants are removed at the same time.

Stable positioning of the bulbous plants in the accommodations can be promoted by fitting clamping means. A wide variety of types of clamping means are proposed in the prior art. According to an advantageous embodiment of the invention, said clamping means, however, consist of plates which preferably extend perpendicularly to the periphery of the accommodations and delimit a tapered opening for such a bulbous plant. That is to say, the bulbous plant can be pushed firmly into the clamping means. No damage to the bulbs during further growth has been observed, such as has been found in the case of systems with which the roots are skewered on pins and the like. Fixing of the bulbs is facilitated if such plates are provided with a sharp cutting edge. It is true that there is local cutting into the coat of the bulb as a result, but in general no damage to the base of the bulb takes place. The consequences of damage to the coat are less than those of damage to the base of the bulb. In cases where damage does have an adverse effect, the edges of the plates can have been chamfered. Moreover, it is possible to fix the plates only at the top or bottom of the tray, as a result of which the plates are able to move resiliently to and fro. Moreover, means can be fitted to determine the depth at which the bulbs have to be introduced over the plates, so that all bulbs are at the same height.

According to a further advantageous embodiment of the invention, the accommodations are made hexagonal and arranged in a honeycomb pattern. It has been found that optimum utilisation of the surface area of the tray is obtained in this way. With an embodiment of this type the clamping plates preferably extend from one or more of the comers of the hexagons.

The wall thickness of the trays and more particularly close to the cutting edge is preferably between 0.5 and 2.5 mm. In this way adequate strength is combined with the ability to cut the relatively soft root material. The actual cutting edge of the plates is preferably made thinner and is less than 2.5 mm.

As indicated above, the invention does not relate exclusively to tulip bulbs, but other plants, such as hyacinths and narcissi, can also be cultivated using the invention.

The plant tray described above is preferably used in combination with a cultivation system with which it is ensured that the roots of the bulbs come into contact with water. This means that a water level must be chosen as a function of the depth to which the bulbs are pressed into the trays. Preferably, the various features are implemented in such a way that the tray is placed in a container into which water is introduced, which water circulates continuously or periodically. Optionally, an ebb/tide system can be used.

The invention will be explained in more detail below with reference to an illustrative embodiment shown in the drawing. In the drawing:
Fig. 1 shows a plan view of a tray according to the invention;
Fig. 2 shows a partially exposed side view of a detail of the tray according to Fig. 1; and
Fig. 3 shows a cross-section along the line 3 - 3 in Fig. in combination with a cultivation system and
Fig. 4 shows, diagrammatically, in cross-section, an alternative method for clamping the bulbous plant.

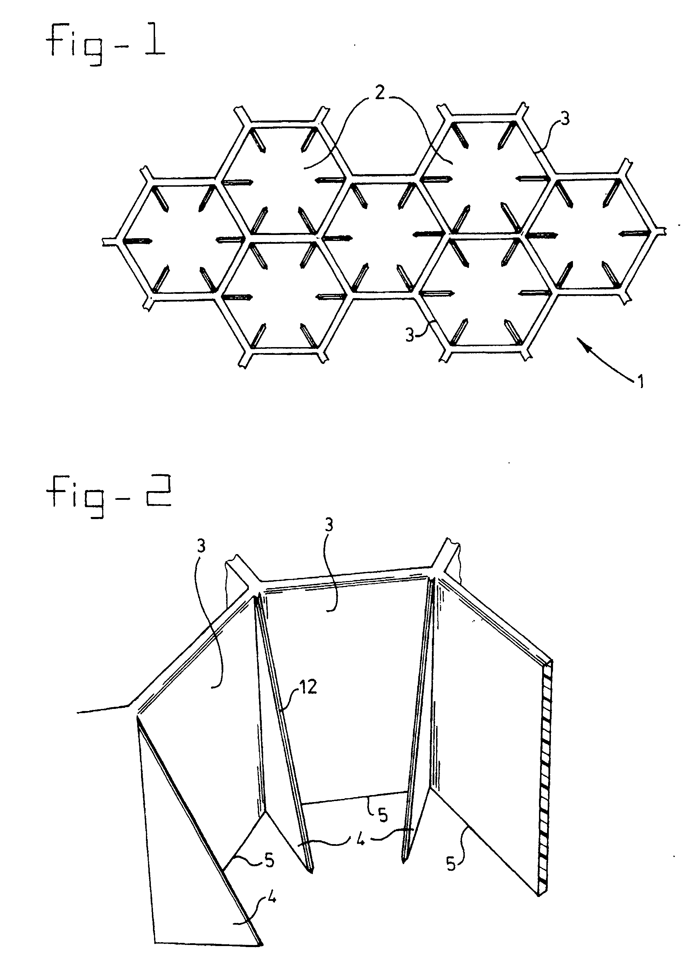

Fig. 1 shows a plan view of a tray for cultivating tulip bulbs. This tray is indicated by 1.

The dimensions of this tray are approximately 60 x 40 cm, but it must be understood that such dimensions are not of essential importance for the inventive concept. 90 - 150 accommodations for holding tulip bulbs have, for example, been made in the tray. This number will be different for other plants.

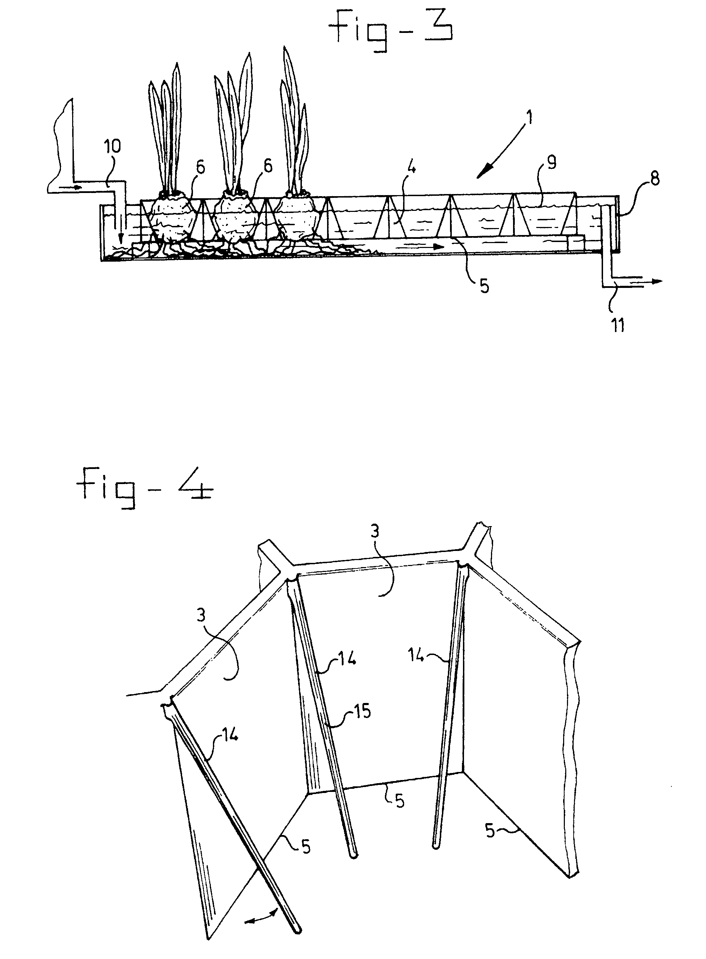

The accommodations are indicated by reference numeral 2 and are hexagonal, the walls being indicated by 3. One accommodation is shown in detail in Fig. 2 and it can be seen that said accommodation is also provided with clamping plates 4, which are constructed such that they slope downwards at an angle, as well as with peripheral walls 3. The bottom edges of the accommodations 2 are indicated by 5. The clamping plates 4 are provided with cutting edges 12 and the edges have been made relatively sharp.

Fig. 3 shows a combination of trays 1 with an ebb/tide system. The latter consists of a liquid-tight container provided with a water feed 10 and water discharge 11, the water level at the particular point in time being indicated by 9. The tray and/or the containers are provided with spacers. The plant is indicated by 6 and it can be seen from the drawing that the roots thereof are in the water 9. By this means optimum growth of the plant can be achieved. Slime formation and rotting is prevented by regular or continuous circulation of water 9. Crop protection agents, fertilisers and the like can optionally be added to the water.

As can be seen from Fig. 3, the roots of adjacent plants 6 will become intertwined, certainly if relatively long cultivation over a number of weeks is used. Under normal circumstances this would impede the removal of the plant 6 from the accommodation 2 concerned. Because of the presence of cutting edges 5, however, the relatively soft root tissue can be simply cut through on exerting a pull on plants 6. Because the root tissue is relatively soft, the requirements in respect of the "sharpness" of cutting edge 5 are not too stringent and such a cutting edge can easily be produced directly by injection moulding with conventional chamfering.

The plant, and more particularly the bulb thereof, is clamped between the clamping plates or clamping walls 4. By this means, on the one hand, severe damage is prevented and, on the other hand, adequate fixation is ensured, so that transport and further handling of the tray are possible. The cutting edge indicated by 12 is, in particular, made sharp so that simple clamping is achieved and possible damage is restricted to a very small region. It is possible for the clamping plates to be of stepped construction or constructed in another way in order to provide a height stop for the bulbs.

A variant of the tray according to the invention is shown in Fig. 4. The components which correspond to those in Figs 1 - 3 have been provided with the same reference numerals. The clamping plates in this embodiment have been indicated by 14 and consist of strips of material fixed only at the top of walls 3. By means of this method of fixing, the plant can be resiliently clamped. In such a case it is not necessary for the edge indicated by 15 to be sharp. This edge is now made chamfered, so that no cutting into the bulb to be placed in the tray takes place.

It must be understood that such a chamfered edge 15 can also be used with the embodiment shown previously, whilst the construction described above with sharp edge 12 can be used in the embodiment under consideration.

Those skilled in the art will understand that the above tray can be modified in a number of obvious ways. Such modifications are considered to fall within the scope of the present claims.

## Claims

1. Plant tray, comprising a plastic body having a number of accommodations (2) for plants (6), wherein, in the use position, each accommodation is provided at the top with an insertion opening for the plant and is at least partially open at the bottom, **characterised in that** the opening at the bottom is delimited by a cutting edge (5) adapted to act in the direction opposite to that in which the plant is removed from the accommodation.

2. Plant tray according to Claim 1, comprising clamping means (4, 14) for the plant in each accommodation.

3. Plant tray according to Claim 2, wherein said clamping means comprise plates extending increasingly further into said accommodation from the insertion opening to the bottom of the accommodation.

4. Plant tray according to Claim 3, wherein said plates are essentially perpendicular to the peripheral boundary of said accommodation.

5. Plant tray according to one of Claims 2 - 4, **characterised in that** said clamping means (4) are provided with sharp cutting edges (12).

6. Plant tray according to one of Claims 2 - 5, comprising at least three clamping means per accommodation.

7. Plant tray according to one of the preceding claims, wherein said clamping means (14) are fitted such that they are resilient with respect to said accommodations.

8. Plant tray according to one of the preceding claims, wherein said accommodations are made hexagonal.

9. Plant tray according to Claims 6 - 8, wherein said clamping means always extend from a corner point of said hexagon.

10. Plant tray according to one of the preceding claims, wherein said boundary walls of said accommodation have a wall thickness of less than 2.5 mm.

11. Plant tray according to one of the preceding claims, wherein said accommodation is designed to take a tulip bulb.

12. Cultivation system comprising a plant tray according to one of the preceding claims, having a container (8) which takes said plant tray, wherein free space is delimited between the bottom of the tray and the base of the container.

13. Cultivation system, according to Claim 12, wherein said free space is common to at least a number of said accommodations at the bottom.

## Patentansprüche

1. Pflanzenpalette, welche einen Kunststoffkörper mit einer Anzahl von Aufnehmungen (2) für Pflanzen (6) umfaßt, wobei in der Verwendungsanordnung jede Aufnehmung im oberen Teil mit einer Einsatzöffnung für die Pflanzen versehen ist und wenigstens teilweise im Boden offen ist, **dadurch gekennzeichnet, daß** die Öffnung im Boden durch eine Schneidkante (5) begrenzt ist, die angepaßt ist, um in der Richtung zu wirken, die entgegengesetzt zu derjenigen ist, in welcher die Pflanze aus der Aufnehmung entfernt wird.

2. Pflanzenpalette nach Anspruch 1, welche Klemmittel (4, 14) für die Pflanze in jeder Aufnehmung umfaßt.

3. Pflanzenpalette nach Anspruch 2, **dadurch gekennzeichnet, daß** die Klemmittel Platten umfassen, welche sich von der Einsatzöffnung zu dem Boden der Aufnehmung zunehmend weiter in die Aufnehmung erstrecken.

4. Pflanzenpalette nach Anspruch 3, **dadurch gekennzeichnet, daß** die Platten im wesentlichen senkrecht zu der Randumgrenzung der Aufnehmung sind.

5. Pflanzenpalette nach einem der Ansprüche 2 bis 4, **dadurch gekennzeichnet, daß** die Klemmittel (4) mit scharfen Schneidkanten (12) versehen sind.

6. Pflanzenpalette nach einem der Ansprüche 2 bis 5, welche wenigstens drei Klemmittel pro Aufnehmung umfaßt.

7. Pflanzenpalette nach einem der vorangehenden Ansprüche, **dadurch gekennzeichnet, daß** die Klemmittel (14) so angebracht sind, daß sie in bezug auf die Aufnehmungen federnd sind.

8. Pflanzenpalette nach einem der vorangehenden Ansprüche, **dadurch gekennzeichnet, daß** die Aufnehmungen sechseckig hergestellt sind.

9. Pflanzenpalette nach Ansprüchen 6 bis 8, **dadurch gekennzeichnet, daß** Klemmittel sich immer von einem Eckpunkt des Sechsecks erstrecken.

10. Pflanzenpalette nach einem der vorangehenden Ansprüche, **dadurch gekennzeichnet, daß** die Umgrenzungswände der Aufnehmung eine Wanddicke von weniger als 2,5 mm aufweisen.

11. Pflanzenpalette nach einem der vorangehenden Ansprüche, **dadurch gekennzeichnet, daß** die Aufnehmung entworfen ist, um eine Tulpenzwiebel aufzunehmen.

12. Zuchtsystem, welches eine Pflanzenpalette nach einem der vorangehenden Ansprüche umfaßt, mit einem Behälter (8), welcher die Pflanzenpalette aufnimmt, **dadurch gekennzeichnet, daß** Freiraum zwischen dem Boden der Palette und der Unterfläche des Behälters begrenzt ist.

13. Zuchtsystem nach Anspruch 12, **dadurch gekennzeichnet, daß** der Freiraum für wenigstens eine Anzahl der Aufnehmungen in dem Boden gemeinsam ist.

## Revendications

1. Bac à plantes, comprenant un corps en matière plastique ayant un certain nombre de logements (2) pour des plantes (6), dans lequel, dans la position d'utilisation, chaque logement comporte dans le haut une ouverture d'insertion pour la plante et est au moins partiellement ouvert dans le bas, **caractérisé en ce que** l'ouverture du bas est délimitée par une arête coupante (5) conçue pour agir dans la direction opposée à celle à laquelle la plante est retirée du logement.

2. Bac à plantes selon la revendication 1, comprenant des moyens de serrage (4, 14) pour la plante logée dans chaque logement.

3. Bac à plantes selon la revendication 2, dans lequel lesdits moyens de serrage comportent des plaques s'étendant de plus en plus loin dans ledit logement depuis l'ouverture d'insertion jusque dans le bas du logement.

4. Bac à plantes selon la revendication 3, dans lequel lesdites plaques sont sensiblement perpendiculaires à la limite périphérique dudit logement.

5. Bac à plantes selon l'une quelconque des revendications 2 à 4, **caractérisé en ce que** lesdits moyens de serrage (4) sont pourvus d'arêtes vives coupantes (12).

6. Bac à plantes selon l'une quelconque des revendications 2 à 5, comprenant au moins trois moyens de serrage par logement.

7. Bac à plantes selon l'une quelconque des revendications précédentes, dans lequel lesdits moyens de serrage (14) sont montés de façon à être élastiques par rapport auxdits logements.

8. Bac à plantes selon l'une quelconque des revendications précédentes, dans lequel lesdits logements ont une forme hexagonale.

9. Bac à plantes selon les revendications 6 à 8, dans lequel lesdits moyens de serrage s'étendent toujours depuis un point d'un angle dudit hexagone.

10. Bac à plantes selon l'une quelconque des revendications précédentes, dans lequel lesdites parois formant limites dudit logement ont une épaisseur de paroi inférieure à 2,5 mm.

11. Bac à plantes selon l'une quelconque des revendications précédentes, dans lequel ledit logement est conçu pour recevoir un bulbe de tulipe.

12. Système de culture comprenant un bac à plantes selon l'une quelconque des revendications précédentes, ayant un récipient (8) qui reçoit ledit bac à plantes, dans lequel l'espace libre est délimité entre le bas du bac et la base du récipient.

13. Système de culture selon la revendication 12, dans lequel ledit espace libre est commun à au moins un certain nombre desdits logements dans le bas.
